# EUROPÄISCHE PATENTSCHRIFT

(11) **EP 0 946 837 B1**
(45) Veröffentlichungstag und Bekanntmachung des Hinweises auf die Patenterteilung: **19.03.2003**
(21) Anmeldenummer: 97952734.8
(22) Anmeldetag: 18.12.1997
(51) Int. Cl.: F16J 15/32

(54) **DICHTUNGSANORDNUNG**
SEALING ARRANGEMENT
GARNITURE D'ETANCHEITE

(30) Priorität: 24.12.1996 DE 19654357
(43) Veröffentlichungstag der Anmeldung: 06.10.1999
(73) Patentinhaber: Busak + Shamban GmbH, 70565 Stuttgart (DE)
(72) Erfinder: JORDAN, Holger, D-70771 Leinfelden-Echterdingen (DE)
(74) Vertreter: KOHLER SCHMID + PARTNER
(86) Internationale Anmeldenummer: DE9702953
(87) Internationale Veröffentlichungsnummer: WO98028560

(56) Entgegenhaltungen:
- DE-A- 4 017 036
- FR-A- 2 590 641
- US-A- 4 723 782

## Beschreibung

Die vorliegende Erfindung betrifft eine Dichtungsanordnung zwischen zwei gegeneinander beweglichen Maschinenteilen zum Abdichten einer Hochdruckseite gegenüber einer Niederdruckseite, wobei das erste Maschinenteil eine zum zweiten Maschinenteil offene Nut aufweist, in der ein Dichtring aus elastischem Material in dichtender Anlage am zweiten Maschinenteil und ein den Dichtring radial spannender Spannring aus elastischem Material angeordnet sind, wobei der Spannring an einer Anlageoberfläche des Dichtrings anliegt.

Eine derartige Dichtungsanordnung ist beispielsweise durch die US 4,723,782 bekanntgeworden.

Aus der EP 0 670 444 A1 ist eine Dichtungsanordnung zwischen zwei konzentrischen, gegeneinander beweglichen Maschinenteilen bekanntgeworden, die einen Dichtring aus einem zähelastischen Kunststoff und einen den Dichtring radial spannenden Spannring aus einem gummielastischen Werkstoff umfaßt.
Das erste Maschinenteil weist eine Nut auf, die den Dichtring und den Spannring aufnimmt. Im druckbeaufschlagten Zustand liegen der Dichtring und der Spannring an der niederdruckseitigen Nutflanke der Nut an, wobei der Dichtring durch den Spannring in dichtender Anlage am zweiten Maschinenteil gehalten ist.

Es hat sich gezeigt, daß sich, insbesondere bei mehreren solchen hintereinander angeordneten Dichtungsanordnungen und bei translatorischer Bewegung der beiden Maschinenteile zueinander, eine invertierte Drucklage ergeben kann, d.h. die eigentliche Niederdruckseite wird zur Hochdruckseite und die eigentliche Hochdruckseite zur Niederdruckseite. Dadurch können unzulässige Deformationen an dem Dichtring, z.B. an einer dynamischen Dichtkante, auftreten, was zu weiterem Ansteigen des Drucks des Druckmediums auf der eigentlichen Niederdruckseite und dadurch zu austretender Leckage und/oder Beschädigung der Maschinenteile führen kann.

Aus der US 4,723,782 ist eine Dichtungsanordnung zum Abdichten der Stelle, an der eine axial bewegliche Stange einer Hydraulikvorrichtung die Gehäusewand der Hydraulikvorrichtung durchdringt. Die Dichtungsanordnung umfaßt einen Dichtring aus einem zähelastischen Material und einen Vorspannring aus einem weicheren Elastomer. Die beiden Ringe sind gemeinsam in einer Rille in der Gehäusewand untergebracht, derart, daß der von der Rille vorspringende Dichtring mit der axial beweglichen Stange in Kontakt steht, während der Vorspannring den Dichtring gegen die Umfangsseite der Rille abdichtet. Der Dichtring weist auf seiner der Stange zugewandten inneren Seite zwei axial versetzte ringförmige Dichtkanten auf. Der ringförmige Raum zwischen den beiden Dichtkanten ist mit der Außenoberfläche des Dichtrings durch einen Kanal verbunden. Der Kanal öffnet sich an einer Stelle, an der er durch den Vorspannring bedeckt ist und die in der Nähe der Hochdruckseite der gemeinsamen Kontaktfläche des Dichtrings und des Vorspannrings liegt.

Der vorliegenden Erfindung liegt daher die Aufgabe zugrunde, eine Dichtungsanordnung der eingangs genannten Art dahin gehend weiterzubilden, daß das Druckmedium bei invertierter Drucklage hydrostatisch zurück auf die eigentliche Hochdruckseite gefördert werden kann.

Diese Aufgabe wird erfindungsgemäß dadurch gelöst, daß in der Anlageoberfläche des Dichtrings mindestens ein Verbindungskanal vorgesehen ist, über den die Hochdruckseite und die Niederdruckseite miteinander verbindbar sind, und daß der mindestens eine Verbindungskanal bei die Hochdruckseite gegenüber der Niederdruckseite abdichtendem Dichtring durch den Spannring verschlossen ist und bei invertierter Drucklage freigegeben ist.

Bei dieser erfindungsgemäßen Dichtungsanordnung übernimmt der Spannring die Funktion eines den Verbindungskanal freigebenden oder verschließenden Steuerelements. Durch den normalerweise auf der Hochdruckseite herrschenden Hochdruck des Druckmediums sind der Spannring und der Dichtring in Richtung auf die niederdruckseitige Nutflanke verschoben und/oder verformt, wodurch der Verbindungskanal, z.B. eine Öffnung des Verbindungskanals, verschlossen ist. Wenn sich die Drucklage invertiert, d.h., wenn der Druck auf der eigentlichen Hochdruckseite geringer als der auf der eigentlichen Niederdruckseite ist, verformt und/oder bewegt sich der Spannring bis zur Anlage an die eigentliche hochdruckseitige Nutflanke. Über den dadurch freigegebenen Verbindungskanal kann das unter Hochdruck stehende Druckmedium von der eigentlichen Niederdruckseite zur eigentlichen Hochdruckseite zurückströmen. Somit ist ein für den sicheren Betrieb der Dichtungsanordnung erforderliches hydrostatisches Rückfördervermögen geschaffen, indem die Dichtungsanordnung selbst die Funktion eines Rückschlagventils beinhaltet.

Vorzugsweise besteht der Dichtring aus einem formstabileren Material als der Spannring. Z.B. kann der Dichtring aus einem zähelastischen Material und der Spannring aus gummielastischem Material gebildet sein.

Bei einer bevorzugten Ausführungsform ist der Spannring bei gleichem Druck auf der Hochdruckseite und auf der Niederdruckseite in seine den Verbindungskanal verschließende Stellung vorgespannt. Dadurch kann sichergestellt werden, daß der Verbindungskanal im drucklosen Zustand der Dichtungsanordnung oder nach einem über den freigegebenen Verbindungskanal erfolgten Druckausgleich verschlossen ist und kein Abströmen des Druckmediums von der Hochdruckseite auf die Niederdruckseite stattfindet. Die Vorspannung kann z.B. durch eine geeignete Geometrie des Dichtrings vorgegeben sein.

Bei einer ersten bevorzugten Ausführungsform ist der mindestens eine Verbindungskanal eine innerhalb des Dichtrings axial verlaufende Durchgangsbohrung, die von der Anlageoberfläche des Dichtrings zur Hochdruckseite führt. Diese Durchgangsbohrung wird an der Anlageoberfläche durch den Spannring entweder verschlossen oder freigegeben.

In einer zweiten besonders bevorzugten Ausführungsform ist der mindestens eine Verbindungskanal eine axial verlaufende Aussparung in der Anlageoberfläche. Die Aussparung ist dem Spannring zugewandt und vorzugsweise nur auf einem hochdruckseitigen axialen Teilabschnitt der Anlageoberfläche des Dichtrings ausgebildet. Bei einer Druckinversion bewegt und/oder verformt sich der Spannring auf der Anlageoberfläche bzw. gegenüber dem Dichtring, wodurch sich die Aussparung zu einem Verbindungskanal öffnet. Das Druckmedium kann dann zwischen Dichtring und Spannring hindurch über diese Aussparung bzw. Verbindungskanal zur eigentlichen Hochdruckseite zurückströmen.

Eine vorteilhafte Weiterbildung dieser Ausführungsform ist dadurch gekennzeichnet, daß die Aussparung zur Hochdruckseite axial offen ist. Dadurch ist die Aussparung leicht zu fertigen.

Damit über den Verbindungskanal bei zunehmender Inversionsdrucklage entsprechend mehr Druckmedium auf die eigentliche Hochdruckseite zurückströmen kann, ist in bevorzugten Weiterbildungen vorgesehen, daß sich die Aussparung zur Hochdruckseite hin in Umfangsrichtung der Anlageoberfläche verbreitert und/oder daß die Tiefe der Aussparung zur Hochdruckseite hin zunimmt. Diese Weiterbildungen haben den Vorteil, daß der bei einer größeren Inversionslage entsprechend mehr oder weiter verschobene bzw. verformte Spannring einen Verbindungskanal mit größerem Öffnungsquerschnitt an der Anlageoberfläche freigibt. Dadurch erhöht sich die zurückströmende Durchflußmenge des Druckmediums.

Bei einer ganz besonders bevorzugten Ausfführungsform mündet der Verbindungskanal in eine zur hochdruckseitigen Nutflanke offene Aussparung im Dichtring, so daß bei invertierter Drucklage das Druckmedium über den Verbindungskanal und diese Aussparung zurückströmen kann.

Bei bevorzugten Ausführungsformen sind mehrere Verbindungskanäle gleichmäßig um den Umfang der Anlageoberfläche verteilt angeordnet.

Weitere Vorteile der Erfindung ergeben sich aus der Beschreibung und der Zeichnung. Ebenso können die vorstehend genannten und die noch weiter aufgeführten Merkmale erfindungsgemäß jeweils einzeln für sich oder zu mehreren in beliebigen Kombinationen Verwendung finden. Die gezeigte und beschriebene Ausführungsform ist nicht als abschließende Aufzählung zu verstehen, sondern hat vielmehr beispielhaften Charakter für die Schilderung der Erfindung.

Es zeigt:
- Fig. 1: die erfindungsgemäße Dichtungsanordnung bei "normaler" Drucklage; und
- Fig. 2: die erfindungsgemäße Dichtungsanordnung der Fig. 1 bei "invertierter" Drucklage.

Bei der in der Zeichnung dargestellten Dichtungsanordnung 1 sind in eine Nut 4 eines ersten Maschinenteils 2 ein Dichtring 5 und ein diesen Dichtring 5 radial spannender Spannring 6 eingelegt. Der Spannring 6 liegt am Nutgrund 9 und an einer Anlageoberfläche 10 des Dichtrings 5 an, so daß der Dichtring 5 in dichtende Anlage an einem zweiten Maschinenteil 3, z.B. eine Stange, beaufschlagt ist. Durch die Dichtungsanordnung 1 ist eine Hochdruckseite H gegenüber einer Niederdruckseite N abgedichtet.

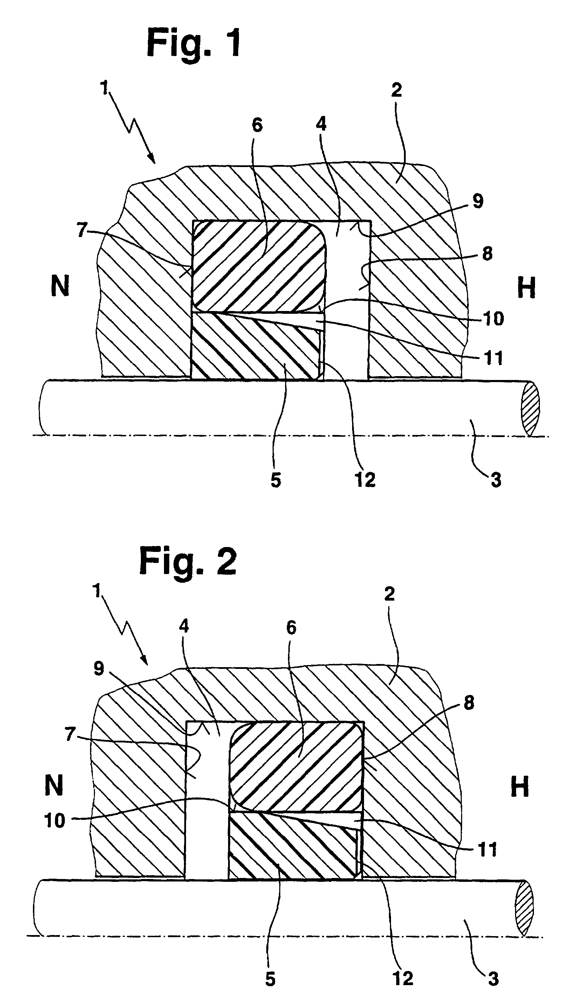

Bei normaler Drucklage (Fig. 1) verschiebt oder verformt das Druckmedium auf der Hochdruckseite H den Dichtring 5 und den Spannring 6 bis zur Anlage an der niederdruckseitigen Nutflanke 7. Dagegen bewegen oder verformen sich bei einer invertierten Drucklage (Fig. 2), d.h., wenn der Druck auf der eigentlichen Hochdruckseite (H) kleiner als der Druck auf der eigentlichen Niederdruckseite (N) ist, der Dichtring 5 und der Spannring 6 bis zu ihrer Anlage an der eigentlichen hochdruckseitigen Nutflanke 8.

In der Anlageoberfläche 10 ist ein als zum Nutgrund 9 offene Aussparung ausgestalteter Verbindungskanal 11 vorgesehen, über den die Hochdruckseite H und die Niederdruckseite N miteinander verbindbar sind. Bei normaler Drucklage, in der der Druck auf der Hochdruckseite H größer als der Druck auf der Niederdruckseite N oder gleich ist, ist dieser Verbindungskanal 11 durch den Spannring 6 verschlossen (Fig. 1). Der Verbindungskanal 11 mündet in eine zur hochdruckseitigen Nutflanke 8 offene Aussparung 12 im Dichtring 5.

Bei invertierter Drucklage ist durch eine Bewegung oder Verformung des Spannrings 6 gegenüber dem Dichtring 5 der Verbindungskanal 11 freigegeben, so daß Druckmedium über den Verbindungskanal 11 und über die Aussparung 12 von der eigentlichen Niederdruckseite (N) zur eigentlichen Hochdruckseite (H) bis zum Druckausgleich zwischen beiden Seiten zurückströmen kann.

Der Spannring 6 ist im drucklosen Zustand, z.B. nach erfolgtem Druckausgleich, durch seine Geometrie auf die den Verbindungskanal 11 verschließende Stellung beaufschlagt, so daß bei auf der Hochdruckseite H ansteigendem Druck das Druckmedium nicht zur Niederdruckseite N abströmen kann.

Die Tiefe der Aussparung und ihre Erstreckung in Umfangsrichtung der Anlageoberfläche 10 nehmen in axialer Richtung zur Hochdruckseite H hin zu, damit über diesen Verbindungskanal 11 bei größerer Inversionsdrucklage auch entsprechend mehr Druckmedium auf die eigentliche Hochdruckseite H zurückströmen kann. D.h., bei geringer Inversionsdrucklage ist der Verbindungskanal 11 nur wenig, bei hoher Inversionsdrucklage dagegen weiter geöffnet.

Vorzugsweise ist die axiale Breite des Spannrings 6 kleiner als die axiale Breite des Dichtrings 5, damit bei Druckinversion eine Axialverschiebung des Spannrings 6 gegenüber dem Dichtring 5 auf der Anlageoberfläche 10 auftritt und dadurch der Verbindungskanal 11 freigegeben wird.

Wenn sich die zum Nutgrund 9 offene Aussparung über die gesamte axiale Breite des Dichtrings 5 erstreckt, kann auch der Dichtring 5 selbst, der im Inversionsfall an der eigentlichen hochdruckseitigen Nutflanke 8 anliegt, die Verbindung der beiden Druckseiten verschließen oder freigeben.

## Patentansprüche

1. Dichtungsanordnung (1) zwischen zwei gegeneinander beweglichen Maschinenteilen (2, 3) zum Abdichten einer Hochdruckseite (H) gegenüber einer Niederdruckseite (N), wobei das erste Maschinenteil (2) eine zum zweiten Maschinenteil (3) offene Nut (4) aufweist, in der ein Dichtring (5) aus elastischem Material in dichtender Anlage am zweiten Maschinenteil (3) und ein den Dichtring (5) radial spannender Spannring (6) aus elastischem Material angeordnet sind, wobei der Spannring (6) an einer Anlageoberfläche (10) des Dichtrings (5) anliegt,
**dadurch gekennzeichnet,**
**daß** in der Anlageoberfläche (10) des Dichtrings (5) mindestens ein Verbindungskanal (11) vorgesehen ist, über den die Hochdruckseite (H) und die Niederdruckseite (N) miteinander verbindbar sind, und daß der mindestens eine Verbindungskanal (11) bei die Hochdruckseite (H) gegenüber der Niederdruckseite (N) abdichtendem Dichtring (5) durch den Spannring (6) verschlossen ist und bei invertierter Drucklage freigegeben ist.

2. Dichtungsanordnung nach Anspruch 1, **dadurch gekennzeichnet, daß** der Spannring (6) bei gleichem Druck auf der Hochdruckseite (H) und auf der Niederdruckseite (N) in seine den Verbindungskanal (11) verschließende Stellung vorgespannt ist.

3. Dichtungsanordnung nach Anspruch 1 oder 2, **dadurch gekennzeichnet, daß** der mindestens eine Verbindungskanal (11) eine innerhalb des Dichtrings (5) verlaufende Durchgangsbohrung ist, die von der Anlageoberfläche (10) des Dichtrings (5) zur Hochdruckseite (H) führt.

4. Dichtungsanordnung nach Anspruch 1 oder 2, **dadurch gekennzeichnet, daß** der mindestens eine Verbindungskanal (11) eine axial verlaufende Aussparung in der Anlageoberfläche (10) ist.

5. Dichtungsanordnung nach Anspruch 4, **dadurch gekennzeichnet, daß** die Aussparung zur Hochdruckseite (H) axial offen ist.

6. Dichtungsanordnung nach Anspruch 4 oder 5, **dadurch gekennzeichnet, daß** sich die Aussparung zur Hochdruckseite (H) hin in Umfangsrichtung der Anlageoberfläche (10) verbreitert.

7. Dichtungsanordnung nach einem der Ansprüche 4 bis 6, **dadurch gekennzeichnet, daß** die Tiefe der Aussparung zur Hochdruckseite (H) hin zunimmt.

8. Dichtungsanordnung nach einem der vorhergehenden Ansprüche, **dadurch gekennzeichnet, daß** der Verbindungskanal (11) in eine zur hochdruckseitigen Nutflanke (8) offene Aussparung (12) im Dichtring (5) mündet.

9. Dichtungsanordnung nach einem der vorhergehenden Ansprüche, **dadurch gekennzeichnet, daß** mehrere Verbindungskanäle (11) gleichmäßig um den Umfang der Anlageoberfläche (10) verteilt angeordnet sind.

## Claims

1. Sealing arrangement (1) between two machine parts (2, 3) which can move relative to each other, for sealing a high-pressure side (H) with respect to a low-pressure side (N), wherein the first machine part (2) has a groove (4) which is open towards the second machine part (3) and accommodates a sealing ring (5) of elastic material in sealing abutment on the second machine part (3) and a tension ring (6) of elastic material radially tensioning the sealing ring (5), wherein the tension ring (6) abuts an abutment surface (10) of the sealing ring (5),
**characterized in that**
at least one connecting channel (11) is provided in the abutment surface (10) of the sealing ring (5) via which the high-pressure side (H) and the low-pressure side (N) can be connected and the at least one connecting channel (11) is closed by the tension ring (6) when the sealing ring (5) seals the high-pressure side (H) from the low-pressure side (N) and is open under inverted pressure conditions.

2. Sealing arrangement according to claim 1, **characterized in that** the tension ring (6) is pretensioned with identical pressures on the high-pressure side (H) and low-pressure side (N) into its position closing the connecting channel (11).

3. Sealing arrangement according to claim 1 or 2, **characterized in that** the at least one connecting channel (11) is a through-bore which extends within the sealing ring (5) and leads from the abutment surface (10) of the sealing ring (5) to the high-pressure side (H).

4. Sealing arrangement according to claim 1 or 2, **characterized in that** the at least one connecting channel (11) is an axial recess in the abutment surface (10).

5. Sealing arrangement according to claim 4, **characterized in that** the recess is axially open towards the high-pressure side (H).

6. Sealing arrangement according to claim 4 or 5, **characterized in that** the recess widens towards the high-pressure side (H) in the peripheral direction of the abutment surface (10).

7. Sealing arrangement according to any one of the claims 4 through 6, **characterized in that** the depth of the recess increases towards the high-pressure side (H).

8. Sealing arrangement according to any one of the preceding claims, **characterized in that** the connecting channel (11) opens in an open recess (12) in the sealing ring (5), which is open towards the high-pressure side groove flank (8).

9. Sealing arrangement according to any one of the preceding claims, **characterized in that** several connecting channels (11) are uniformly distributed about the periphery of the abutment surface (10).

## Revendications

1. Dispositif d'étanchéité (1) entre deux pièces de machine (2, 3) mobiles l'une par rapport à l'autre pour fermer de façon étanche un côté haute pression (H) par rapport à un côté basse pression (N), la première pièce de machine (2) comportant une rainure (4), qui s'ouvre en direction de la seconde pièce de machine (3) et dans laquelle sont disposées une bague d'étanchéité (5) en un matériau élastique, qui est appliquée de façon étanche contre la seconde pièce de machine (3), et une bague de serrage (6) qui serre radialement la bague d'étanchéité (5) et réalisée en un matériau élastique, la bague de serrage (6) s'appliquant contre une surface d'application (10) de la bague d'étanchéité (5),
**caractérisé en ce**
**que** dans la surface d'application (10) de la bague d'étanchéité (5) est prévu au moins un canal de liaison (11), au moyen duquel le côté haute pression (H) et le côté basse pression (N) peuvent être reliés entre eux, et qu'au moins un canal de liaison (11) présent dans la bague d'étanchéité (5) qui ferme d'une manière étanche le côté haute pression (H) par rapport au côté basse pression (N), est fermé par la bagué de serrage (6) et est libéré dans le cas d'une fluctuation de pression inverse.

2. Dispositif d'étanchéité selon la revendication 1, **caractérisé en ce que** la bague de serrage (6) est précontrainte, pour une même pression sur côté haute pression (H) et sur le côté basse pression (N), dans sa position fermant le canal de liaison (11).

3. Dispositif d'étanchéité selon la revendication 1 ou 2, **caractérisé en ce que** le au moins un canal de liaison (11) est un perçage traversant, qui s'étend à l'intérieur de la bague d'étanchéité (5) et s'étend de la surface d'application (10) de la bague d'étanchéité (5) au côté haute pression (H).

4. Dispositif d'étanchéité selon la revendication 1 ou 2, **caractérisé en ce que** le au moins un canal de liaison (11) est un évidement axial formé dans la surface d'application (10).

5. Dispositif d'étanchéité selon la revendication 4, **caractérisé en ce que** l'évidement du côté haute pression (H) est ouvert axialement.

6. Dispositif d'étanchéité selon la revendication 4 ou 5, **caractérisé en ce que** l'évidement tourné du côté haute pression (H) s'élargit dans la direction circonférentielle de la surface d'application (10).

7. Dispositif d'étanchéité selon l'une des revendications 4 à 6, **caractérisé en ce que** la profondeur de l'évidement augmente en direction du côté haute pression (H).

8. Dispositif d'étanchéité selon l'une des revendications précédentes, **caractérisé en ce que** le canal de liaison (11) débouche dans un évidement (12) qui est formé dans le bec d'étanchéité (5) et s'ouvre en direction du flanc de rainure (8) situé sur le côté haute pression.

9. Dispositif d'étanchéité selon l'une des revendications précédentes, **caractérisé en ce que** plusieurs canaux de liaison (11) sont disposés d'une manière uniforme en étant répartis autour de la périphérie de la surface d'application (10).
